# EUROPÄISCHE PATENTSCHRIFT

(11) **EP 3 048 456 B1**
(45) Veröffentlichungstag und Bekanntmachung des Hinweises auf die Patenterteilung: **20.12.2017**
(21) Anmeldenummer: 16151074.8
(22) Anmeldetag: 13.01.2016
(51) Int. Cl.: G01S 17/02, G01S 17/42, G01S 17/89, G06K 9/00, G06K 9/20, B25J 9/16, B25J 13/08

(54) **VERFAHREN ZUR LOKALISIERUNG VON GREIFPUNKTEN VON OBJEKTEN**
METHOD FOR LOCATING OF GRIP POINTS OF OBJECTS
PROCEDE DE LOCALISATION DE POINTS DE SAISIE D'OBJETS

(30) Priorität: 23.01.2015 DE 102015100983
(43) Veröffentlichungstag der Anmeldung: 27.07.2016
(73) Patentinhaber: SICK AG, 79183 Waldkirch/Breisgau (DE)
(72) Erfinder: Wehrle, Klemens, 79297 Winden (DE); Hippenmeyer, Heinrich, 79348 Freiamt (DE); Uhl, Hubert, 79183 Waldkirch (DE); Denz, Björn, 79211 Denzlingen (DE); Grafmüller, Martin, 79348 Freiamt (DE)
(74) Vertreter: Manitz Finsterwald Patentanwälte PartmbB

(56) Entgegenhaltungen:
- EP-A2- 1 190 818
- EP-A2- 1 905 548
- DE-A1- 19 607 258
- US-A- 5 912 934

## Beschreibung

Die vorliegende Erfindung betrifft ein Verfahren zur Lokalisierung von Greifpunkten von Objekten, insbesondere von eng nebeneinander angeordneten Objekten.

In der Materialfluss- und Automatisierungstechnik kommen insbesondere Greifroboter oder Pick-and-Place-Automaten zum Einsatz, um Pakete, einzelne Bauteile, vorgefertigte Komponenten oder ähnliches zu bewegen und weiteren Arbeitsschritten zuzuführen.

Um ein sicheres Handling dieser Objekte zu gewährleisten, müssen die räumliche Lage sowie die räumliche Ausdehnung der Objekte möglichst genau bekannt sein, um passende Ansatzpunkte für beispielsweise einen Greifarm - die sogenannten Greifpunkte - zu ermitteln.

Beispielsweise können Laserscanner verwendet werden, um die dreidimensionale Lage von Objekten und deren Abmessungen zu detektieren. Insbesondere bei sehr eng nebeneinander angeordneten Objekten können die einzelnen Objekte aufgrund der häufig mangelnden Auflösung von Laserscannern nur mit Schwierigkeiten voneinander unterschieden werden. In der Folge müssen deutlich hochwertigere und damit teurere Laserscanner verwendet werden, um auch dicht gedrängte Objekte voneinander unterscheiden zu können.

Aus der EP 1 190 818 A2 und der EP 1 905 548 A2 sind Verfahren gemäß dem Oberbegriff des Anspruchs 1 bekannt. Bei diesen Verfahren wird ein 3D-Sensor von einem Roboter bewegt.

Die DE 196 07 258 A1 lehrt die Verwendung mehrerer Leuchtstoffröhren, um einen Objektbereich auszuleuchten. Aus der US 5 912 934 A ist ein Erkennungssystem für Brennstäbe eines Kernkraftwerks bekannt, welches mehrere Beleuchtungseinrichtungen verwendet.

Es ist die der Erfindung zugrundeliegende Aufgabe, ein Verfahren zur Lokalisierung von Greifpunkten, insbesondere bei nahe aneinander angeordneten Objekten anzugeben, welches eine zuverlässige Unterscheidung einzelner Objekte ermöglicht und zugleich kostengünstig und damit wirtschaftlich durchführbar ist.

Erfindungsgemäß wird diese Aufgabe durch ein Verfahren gemäß Anspruch 1 gelöst. Das erfindungsgemäße Verfahren sieht dabei vor, dass die Objekte mittels eines 3D-Sensors abgetastet werden. Zudem werden die Objekte auch mittels zumindest einer ersten Beleuchtungseinheit beleuchtet, während die Objekte mittels einer Kamera erfasst werden. Dabei sind die Relativpositionen des 3D-Sensors, der ersten Beleuchtungseinheit und der Kamera zueinander bekannt und der 3D-Sensor, die erste Beleuchtungseinheit und die Kamera sind zueinander ortsfest angeordnet. Aus einem von der Kamera erzeugten zweidimensionalen Bild werden die Begrenzungen der Objekte ermittelt und aus der erfassten Abstandsinformation des 3D-Sensors und dem zweidimensionalen Bild wird eine räumliche Position der Objekte ermittelt. Die Greifpunkte für die Objekte werden aus den Begrenzungen und der räumlichen Position der Objekte bestimmt.

Der Erfindung liegt dabei die Erkenntnis zugrunde, dass auf einen besonders hochauflösenden und damit teuren Laserscanner verzichtet werden kann, indem die räumliche Position der Objekte und damit die Greifpunkte mittels einer Fusion der Abstandsinformation des 3D-Sensors und des zweidimensionalen Bildes der Kamera erzeugt wird. Zudem kann aufgrund der Beleuchtung der Objekte mittels der ersten Beleuchtungseinheit aus einer bekannten und vorbestimmten Richtung die Unterscheidbarkeit der einzelnen Objekte im zweidimensionalen Bild der Kamera verbessert werden.

Die Erfindung nutzt somit die synergistischen Effekte der Kombination eines 3D-Sensors, einer Kamera und einer Beleuchtungseinheit aus, um eine sichere Unterscheidung auch von eng aneinander angeordneten Objekten mit Standardkomponenten zu ermöglichen. Auf diese Weise ist ein zuverlässiges und zugleich besonders kostengünstiges und damit wirtschaftliches Bestimmen der Greifpunkte von Objekten möglich.

Der in dem Verfahren zum Einsatz kommende 3D-Sensor kann insbesondere ein herkömmlicher Laserscanner sein, welcher zusätzlich Abstands- bzw. Tiefeninformationen erfasst, beispielsweise über eine Lichtlaufzeitmessung. Alternativ kann der 3D-Sensor eine Stereo-Kamera, eine TOF-Kamera (Time of Flight-Kamera bzw. Lichtlaufzeitkamera) und dergleichen sein. Die Kamera zur Aufnahme der zweidimensionalen Bilder kann eine CCD- oder CMOS-Kamera sein. Insbesondere wird von der Kamera ein zweidimensionales, aus einzelnen Pixeln aufgebautes Bild in Farbe, Grauwerten oder Schwarzweiß aufgenommen.

Da die erste Beleuchtungseinheit relativ zu der Kamera und dem 3D-Sensor ortsfest angeordnet ist, erfolgt die Beleuchtung durch die erste Beleuchtungseinheit aus einer vorbestimmten Richtung. Somit kann insbesondere das von der Kamera erzeugte zweidimensionale Bild ausgenutzt werden, um z.B. anhand eines Schattenwurfs in der Beleuchtungsrichtung Kanten der Objekte zu erkennen. Aus den Kanten kann die Begrenzung der Objekte abgeleitet werden. Dies bedeutet, dass die räumliche Ausdehnung der Objekte ermittelt werden kann.

Dabei wird die in dem zweidimensionalen Bild der Kamera sichtbare Begrenzung eines Objekts insbesondere mittels der Abstandsinformation des 3D-Sensors in eine Größenrelation gesetzt, um die räumliche Position und die tatsächliche Größe des Objekts zu ermitteln.

Erfindungsgemäß wird somit ausgenutzt, dass die einzelnen Objekte mittels der Kamera gut unterscheidbar sind und mittels der zusätzlichen Abstandsinformation des 3D-Sensors deren räumliche Position ermittelbar ist. Nachdem die räumliche Position sowie die Ausdehnung eines Objekts bekannt sind, kann beispielsweise der geometrische Schwerpunkt des Objekts bestimmt werden. Ein Greifpunkt des Objekts kann dann insbesondere bei dem Schwerpunkt oder über dem Schwerpunkt sein, wenn lediglich ein Greifpunkt benötigt wird und das Objekt beispielsweise mittels Unterdruck angehoben wird. Alternativ können die Greifpunkte auch so bestimmt werden, dass z.B. immer zwei Greifpunkte eine imaginäre Verbindungslinie bilden, die durch den geometrischen Schwerpunkt verläuft. In der Regel sind geometrischer und physikalischer Schwerpunkt in der Greifebene zumindest nahe beieinander, so dass auf diese Weise insbesondere ein Kippen oder Verrutschen des Objekts während des Greifens verhindert werden kann.

Vorteilhafte Ausführungsformen der Erfindung sind in der Beschreibung, den Zeichnungen und den Unteransprüchen angegeben.

Erfindungsgemäß werden die Objekte zumindest auch von einer zweiten, dritten und vierten Beleuchtungseinheit beleuchtet, während die Objekte mittels der Kamera erfasst werden, wobei die Beleuchtungseinheiten räumlich versetzt zueinander angeordnet sind. Die Beleuchtungseinheiten können auch ortsfest zueinander angeordnet sein.

Weiterhin können die Beleuchtungseinheiten insbesondere eine flächige und homogene Beleuchtung der Objekte erzeugen. Zu diesem Zweck können die Beleuchtungseinheiten langgestreckt ausgebildet sein und über ihre gesamte Längserstreckung Licht emittieren. Insbesondere eignen sich deshalb LED-Leisten zur Beleuchtung der Objekte. Eine Beleuchtungseinheit kann allgemein auch mehrere Leuchtmittel umfassen.

Aufgrund des räumlichen Versatzes der Beleuchtungseinheiten zueinander können die Objekte aus unterschiedlichen Raumrichtungen beleuchtet werden, was zu einer Schattenreduktion führt. Die Objekte sind dann gleichmäßig beleuchtet, wodurch die räumliche Begrenzung der Objekte in dem zweidimensionalen Bild der Kamera auf besonders einfache Art und Weise ermittelt werden kann, da zu Fehlinterpretationen führende, unerwünschte Schatten verringert werden. Zudem sind die Schatten an den Objektkanten wegen des räumlichen Versatzes der Beleuchtungseinheiten unterschiedlich, sodass die Objekte besser und damit präziser lokalisiert werden können.

Insbesondere sind die Beleuchtungseinheiten derart angeordnet, dass die Objekte im Wesentlichen aus vier lateral jeweils um 90° zueinander versetzten Richtungen beleuchtet werden können ("Nord", "Ost", "Süd", "West"). "Lateral versetzt" soll dabei bedeuten, dass die auf diejenige Ebene, in der die Beleuchtungseinheiten angeordnet sind, projizierten Beleuchtungsrichtungen in dieser Ebene einen entsprechenden Winkel zwischen sich einschließen (hier also 90°). Alternativ sind auch eine kreisförmige Anordnung der Beleuchtungseinheiten und/oder die Verwendung von mehr als vier Beleuchtungseinheiten möglich.

Erfindungsgemäß werden die Beleuchtungseinheiten nacheinander aktiviert, wobei die Kamera bei Aktivierung jeder Beleuchtungseinheit die Objekte erfasst und jeweils ein zweidimensionales Bild erzeugt. Bei dem oben erläuterten Beispiel mit vier Beleuchtungseinheiten, die jeweils um 90° zueinander lateral versetzte Beleuchtungsrichtungen aufweisen, werden somit vier zweidimensionale Bilder erzeugt, wobei in jedem Bild der Schattenwurf jeweils um etwa 90° verschieden ist. Alternativ können auch alle Beleuchtungseinheiten gleichzeitig aktiv sein, wobei dann die Erzeugung eines einzigen zweidimensionalen Bildes ausreicht.

Erfindungsgemäß wird aus jeweils zwei von der Kamera erzeugten zweidimensionalen Bildern ein Maximumbild erzeugt, wobei an dem Maximumbild eine Gradientenfilterung vorgenommen wird, um ein Kantenbild zu erzeugen, und jeweils zwei Kantenbilder mittels einer Minimumbildung zu einem ersten Ergebnisbild fusioniert werden.

Für das Maximumbild werden bevorzugt zwei von der Kamera erzeugte Bilder verwendet, die bei Beleuchtung mit gegenüberliegenden Beleuchtungseinheiten entstanden sind. Beispielsweise kann ein Maximumbild aus einem von der Beleuchtungseinheit "Nord" und einem von der Beleuchtungseinheit "Süd" beleuchteten Bild erzeugt werden. Bei der Erzeugung des Maximumbilds wird für jeden Bildpunkt ein Vergleich der zwei von der Kamera erzeugten zweidimensionalen Bilder vorgenommen und derjenige Bildpunkt in das Maximumbild übernommen, der den höheren Wert besitzt, das heißt der - bei einem Schwarzweiß oder Graustufenbild - heller ist. Mittels des Maximumbilds können die bei Beleuchtung entstehenden Schatten eliminiert werden.

Das Maximumbild kann anschließend einer Gradientenfilterung unterzogen werden, wobei die Richtung der Gradientenfilterung der Beleuchtungsrichtung eines der zwei von der Kamera erzeugten Ausgangsbilder entspricht. Durch die Gradientenfilterung entsteht ein Kantenbild, welches ein zweidimensionales Bild mit hervorgehobenen Kanten ist. Alternativ kann anstelle der Gradientenfilterung auch beispielsweise ein Matrix-Kantenfilter verwendet werden.

Jeweils zwei Kantenbilder können abschließend mittels einer Minimumbildung zu einem ersten Ergebnisbild fusioniert werden. Bei der Minimumbildung wird analog zur Erzeugung des Maximumbilds aus den zwei Kantenbildern für jeden Bildpunkt jeweils der Bildpunkt mit dem niedrigeren Wert in das erste Ergebnisbild übernommen. Das erste Ergebnisbild entsteht somit aus der Kombination zweier Kantenbilder, wobei ein Kantenbild wiederum jeweils aus zwei von der Kamera erzeugten Bildern erzeugt wird. In dem Ergebnisbild sind die Begrenzungen oder Objekte aufgrund der Eliminierung der Schatten und der hervorgehobenen Kanten besonders gut sichtbar. Zusätzlich zur Beleuchtung mit vier Beleuchtungseinheiten können die Objekte auch von der ersten und von der zweiten Beleuchtungseinheit mit einem Streifenmuster beleuchtet werden, während die Objekte mittels der Kamera erfasst werden. Insbesondere können die erste und die zweite Beleuchtungseinheit eine Beleuchtung aus um 90° oder 180° lateral versetzten Richtungen ermöglichen. Die zweite Beleuchtungseinheit kann zu der ersten Beleuchtungseinheit ortsfest angeordnet sein.

Zur Erzeugung des Streifenmusters können die Beleuchtungseinheiten insbesondere Projektoren sein oder mittels einer beweglichen Laserquelle das Streifenmuster auf die Objekte projizieren. Mittels der Beleuchtungseinheiten können verschiedene Linien und Streifenmuster auf die Objekte projiziert werden. Um die Objekte in ihrer Gänze zu erfassen, können nacheinander auch "wandernde" oder zueinander inverse Muster verwendet werden, die insbesondere auch eine Codierung aufweisen können. Beispielsweise können Muster mit Linien in verschiedenen Richtungen sowie Schachbrett- oder Karomuster und dergleichen eingesetzt werden. Alternativ oder zusätzlich kann auch eine Streifenbreite und/oder ein Streifenabstand variiert werden. Die Muster können zudem in Abhängigkeit von der Beleuchtungsrichtung unterschiedlich orientiert sein.

Ferner können die Muster auch an die erwartete oder vermutete Größe der Objekte angepasst sein. Dies bedeutet, dass bei kleineren Objekten feinere Muster verwendet werden als bei größeren Objekten.

Aufgrund der streifenden Beleuchtung wird der Schattenwurf von Objektkanten gezielt verstärkt, wodurch die Kontur und damit die Begrenzung der Objekte besonders gut von der Kamera erfasst werden kann. Zudem können die Objekte aufgrund einer zusätzlichen Tiefenschätzung nach einem Lichtschnittverfahren genauer erkannt werden. Die Tiefenschätzung ist durch Sprünge der Streifen an den Objektkanten bzw. an Objektübergängen möglich.

Bevorzugt werden die erste und die zweite Beleuchtungseinheit nacheinander aktiviert, wobei die Kamera bei Aktivierung jeder Beleuchtungseinheit die Objekte erfasst und jeweils ein zweidimensionales Bild erzeugt. Auf diese Weise können die Objekte unter Lichteinfall aus verschiedenen Richtungen von der Kamera erfasst werden, wodurch die Begrenzungen der Objekte unabhängig von der räumlichen Lage der Objekte durch den Schattenwurf in unterschiedliche Richtungen besser erkannt werden können. Alternativ kann auch eine aufeinanderfolgende Beleuchtung aus mehreren Beleuchtungsrichtungen erfolgen. Zum Beispiel können die Muster nacheinander aus vier Beleuchtungsrichtungen erzeugt werden, wobei die Muster jeweils um 90° zueinander gedreht sind.

Gemäß einer Weiterbildung der Ausführungsform unter Ausnutzung von Streifenmustern wird aus den von der Kamera erzeugten zweidimensionalen Bildern, insbesondere mittels Gradientenfilterung, jeweils ein Kantenbild erzeugt, wobei die Kantenbilder mittels einer Minimumbildung zu einem zweiten Ergebnisbild fusioniert werden. Die Gradientenfilterung kann dabei in der Richtung erfolgen, die der Beleuchtungsrichtung der jeweiligen Beleuchtungseinheit entspricht, die bei Erzeugung des zweidimensionalen Bilds aktiv war. Anstelle der Gradientenfilterung kann auch ein Matrix-Kantenfilter eingesetzt werden. Das zweite Ergebnisbild basiert somit auf zwei von der Kamera erzeugten zweidimensionalen Bildern, die bei aktivierter erster bzw. zweiter Beleuchtungseinheit aufgenommen wurden. Gemäß einer weiteren vorteilhaften Ausführungsform werden in dem ersten oder in dem zweiten Ergebnisbild die Begrenzungen der Objekte ermittelt, insbesondere in dem das Ergebnisbild mit einer, bevorzugt L-förmigen, Vorlage (Template) korreliert wird. Zudem kann aus den Begrenzungen der Objekte der jeweilige Schwerpunkt der Objekte bestimmt werden.

In den Ergebnisbildern sind die Kanten der Objekte hervorgehoben, so dass die Begrenzungen der Objekte auf einfache Art und Weise ermittelt werden können. Insbesondere kann bei Kenntnis der Form der Objekte ein Template mit dem Ergebnisbild korreliert werden, um das Vorhandensein sowie die Größe und Position der Objekte zu ermitteln. Für quaderförmige Objekte wird bevorzugt ein L-förmiges Template verwendet, mit dessen Hilfe die Ecken der quaderförmigen Objekte gefunden werden können. Bei runden oder zylindrischen Objekten können stattdessen kreisförmige Templates zum Einsatz kommen. Bei entsprechendem Vorwissen über die Form der zu greifenden Objekte kann das verwendete Template entsprechend ausgewählt bzw. angepasst werden.

Um den geometrischen Schwerpunkt eines jeweiligen Objekts zu bestimmen, kann zunächst der Schwerpunkt in der Betrachtungsebene der Kamera, das heißt basierend auf den zweidimensionalen Bildern oder dem Ergebnisbild ermittelt werden. Anschließend kann der Schwerpunkt in der Betrachtungsebene unter Zuhilfenahme der Abstandsinformation des 3D-Sensors und der damit bekannten Höhe des Objekts zu einem räumlichen Schwerpunkt kombiniert werden. Anhand der nun bekannten räumlichen Position und Ausdehnung des Objekts können nun die Greifpunkte auf die bereits erläuterte Art und Weise bestimmt werden.

Für die Bestimmung der jeweiligen Schwerpunkte ist es dabei unerheblich, ob ein erstes oder zweites Ergebnisbild zur Ermittlung der Begrenzungen der Objekte verwendet wird. Zwar werden das erste und das zweite Ergebnisbild unter Zuhilfenahme unterschiedlicher Beleuchtungsansätze erzeugt, das resultierende erste und zweite Ergebnisbild zeigt jedoch unabhängig von dem Beleuchtungsansatz die hervorgehobenen Kanten der Objekte.

Gemäß einer weiteren vorteilhaften Ausführungsform werden die Begrenzungen der Objekte anhand des ersten und des zweiten Ergebnisbilds ermittelt, insbesondere durch eine Mittelwertbildung. Auf diese Weise wird eine besonders robuste Lokalisierung von Greifpunkten ermöglicht, da eventuelle Ungenauigkeiten bei einem Beleuchtungsansatz durch den anderen Beleuchtungsansatz ausgeglichen werden können. Insbesondere ist dabei von Vorteil, dass die verschiedenen Beleuchtungsansätze auf unterschiedlichen Grundideen beruhen, nämlich zum einen auf der Eliminierung von Schatten und zum anderen auf der gezielten Verstärkung von Schattenwurf.

Beispielsweise können so nacheinander vier zweidimensionale Bilder mit homogener Beleuchtung aus vier Raumrichtungen und zwei zweidimensionale Bilder mit einem aus unterschiedlichen Richtungen projizierten Streifenmuster zur Ermittlung der ersten und zweiten Ergebnisbilder herangezogen werden.

Bevorzugt wird mehrmals ein erstes und zweites Ergebnisbild erzeugt, wobei die Begrenzungen der Objekte mittels einer statistischen Auswertung der Ergebnisbilder ermittelt werden. Aufgrund der statistischen Auswertung und der mehrmaligen Erfassung der Objekte kann die Konfidenz in einen ermittelten Greifpunkt noch weiter gesteigert werden. Zudem kann die Konfidenz durch eine zusätzliche Tiefenschätzung weiter erhöht werden.

Gemäß einer weiteren vorteilhaften Ausführungsform ist das Emissionsspektrum der Beleuchtungseinheit oder der Beleuchtungseinheiten veränderbar, wobei das Emissionsspektrum insbesondere an eine Oberflächenfarbe der Objekte angepasst wird. Beispielsweise können zur Beleuchtung RGB-LEDs mit veränderbarer Lichtfarbe verwendet werden, deren Lichtfarbe automatisiert so lange verändert wird, bis ein maximaler Kontrast in den zweidimensionalen Bildern der Kamera vorliegt. Insbesondere kann die Lichtfarbe der Beleuchtung auch zeitlich und/oder zyklisch variieren.

Der maximale Kontrast ist insbesondere bei der Verwendung eines Streifenmusters hilfreich, wobei bei maximalem Kontrast vorteilhafterweise eine störende Textur der Objekte unterdrückt werden kann. Beispielsweise kann eine blaue Beschriftung durch die Verwendung einer roten Beleuchtung "ausgeblendet" werden.

Alternativ ist auch der Einsatz von Infrarotlicht möglich, wobei durch Infrarotlicht ebenfalls störende Texturen ausblendbar sind. Zudem ist Infrarotlicht für den Menschen nicht sichtbar, weshalb eine solche Beleuchtung nicht als störend empfunden wird.

Gemäß einer weiteren vorteilhaften Ausführungsform werden die Objekte derart angeordnet, dass von der Position der Kamera aus gesehen, die freie Fläche zwischen zwei Objekten kleiner als 10 %, bevorzugt kleiner als 5 %, besonders bevorzugt kleiner als 1 %, der von den zwei Objekten eingenommenen Fläche ist. Dies bedeutet, die Objekte stehen sehr dicht aneinander und können einen Abstand von wenigen Zentimetern oder Millimetern aufweisen oder sogar aneinander angrenzen. Auf diese Art und Weise nehmen die zu greifenden Objekte selbst weniger Platz ein, wodurch auch der Platzbedarf einer die Objekte verarbeitenden Automatisierungsanlage verringert werden kann. Trotzdem ist es mit dem erfindungsgemäßen Verfahren möglich, die Objekte sicher zu diskriminieren. Die vorstehenden Flächenangaben beziehen sich dabei auf die Sicht der Kamera bzw. das von der Kamera erzeugte zweidimensionale Bild.

Die Erfindung betrifft weiterhin ein Verfahren zum Greifen von Objekten, wobei die Greifpunkte der Objekte nach der vorstehend beschriebenen Art und Weise lokalisiert werden und die Objekte nacheinander von einem Roboter mit einer Greifvorrichtung gegriffen und bewegt werden. Die räumliche Position der Objekte und der zugehörigen Greifpunkte wird somit an einen Roboter übermittelt, woraufhin der Roboter die Objekte mit der Greifvorrichtung greifen und an eine Zielposition bewegen kann. Dem Roboter können dazu die räumlichen Positionen der Greifpunkte sowie die Ausrichtung der Objekte mitgeteilt werden.

Außerdem betrifft die Erfindung eine Vorrichtung zur Lokalisierung von Greifpunkten von Objekten gemäß Anspruch 12. Die Vorrichtung kann alternativ auch nur eine erste und zweite Beleuchtungseinheit aufweisen, die zur streifenden Beleuchtung der Objekte ausgebildet sind.

Die Ausführungen zu den erfindungsgemäßen Verfahren gelten für die erfindungsgemäße Vorrichtung entsprechend.

Bevorzugt sind alle Komponenten der Vorrichtung an einem gemeinsamen Gestell angebracht sein, wodurch die Beleuchtungseinheiten, der 3D-Sensor und die Kamera ortsfest zueinander sein können. Das Gestell kann fahrbar bzw. als selbstfahrendes Fahrzeug ausgebildet sein.

Weiterhin kann die Vorrichtung eine Steuereinheit umfassen, die die Beleuchtungseinheiten, die Kamera und den 3D-Sensor steuert und die von der Kamera und dem 3D-Sensor erzeugten Bilder bzw. Daten verarbeitet. Die Steuereinheit kann auch mit einem Förderband, einem Greif-Roboter und dergleichen gekoppelt sein, um beispielsweise ein automatisches Greifen von auf dem Förderband angelieferten Objekten zu ermöglichen.

Nachfolgend wird die Erfindung rein beispielhaft unter Bezugnahme auf die beigefügten Zeichnungen beschrieben. Es zeigen:
- Fig. 1: eine perspektivische Ansicht einer erfindungsgemäßen Vorrichtung zur Lokalisierung von Greifpunkten von Objekten;
- Fig. 2: eine perspektivische Ansicht der Beleuchtungseinheiten von Fig. 1;
- Fig. 3: mehrere Objekte in Draufsicht; und
- Fig. 4: einen schematischen Verfahrensablauf zur Lokalisierung von Greifpunkten.

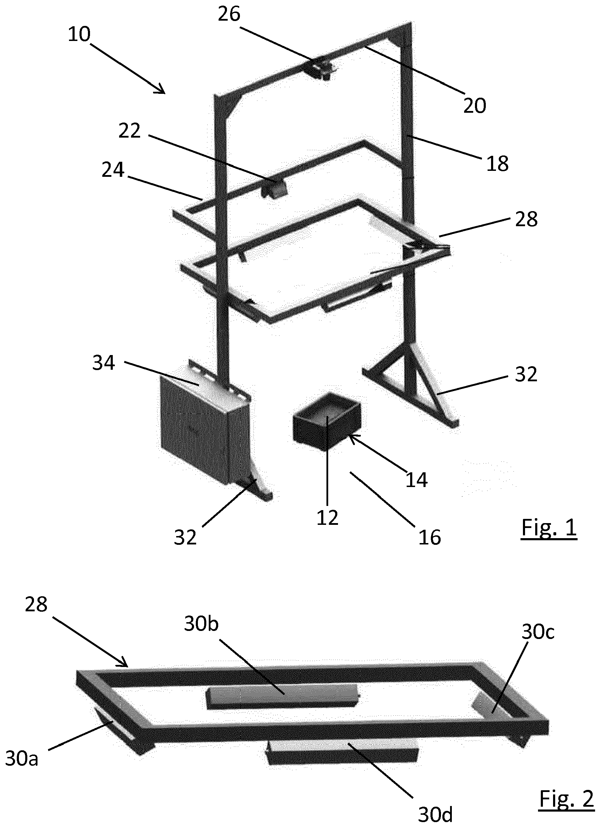

Fig. 1 zeigt eine Vorrichtung 10 zur Lokalisierung von Greifpunkten von Objekten 12. Die Objekte 12 sind in einem Transportbehälter 14 angeordnet, welcher auf einer Auflagefläche 16 aufliegt. Auf der Auflagefläche 16 ist ein Gestell 18 angeordnet, das eine im Wesentlichen umgedrehte U-Form aufweist. Mittig an einem oberen Querträger 20 des Gestells 18 ist eine CCD-Kamera 26 befestigt.

Das Gestell 18 umfasst zudem einen mittleren Querträger 24, an welchem ein Laserscanner 22 befestigt, der als 3D-Sensor dient und auf die Objekte 12 gerichtet ist. Der mittlere Querträger 24 weist eine U-Form auf, die senkrecht zu der U-Form des Gestells 18 angeordnet ist, wodurch der Laserscanner 22 außermittig zu dem Gestell 18 positioniert ist und den Blick der Kamera 26 auf die Objekte 12 nicht behindert. Die CCD-Kamera 26 ist ebenfalls auf die Objekte 12 gerichtet.

Das Gestell 18 umfasst weiterhin einen unteren Querträger 28, der zwischen dem mittleren Querträger 24 und der Auflagefläche 16 angeordnet ist. Der untere Querträger 28 ist rechteckig ausgebildet und senkrecht zu der Erstreckungsebene der U-Form des Gestells 18 angeordnet. Der untere Querträger 28 erstreckt sich beiderseits der U-Form des Gestells 18, wobei die Objekte 12 unterhalb des unteren Querträgers 28 angeordnet sind und von der Kamera 26 aus gesehen bevorzugt innerhalb des unteren Querträgers 28 zu liegen kommen.

Der untere Querträger 28 ist genauer in Fig. 2 gezeigt und weist an jeder seiner Seiten jeweils eine Beleuchtungseinheit 30a, 30b, 30c, 30d auf. Aufgrund der Anordnung an dem reckteckigen unteren Querträger 28 definieren die Beleuchtungseinheiten 30a, 30b, 30c, 30d eine gemeinsame Ebene. Die Beleuchtungseinheiten 30a, 30b, 30c, 30d sind an dem unteren Querträger 28 schwenkbar angeordnet, um die Beleuchtungsrichtung an unterschiedlich hohe Objekte 12 anpassen zu können.

Die Beleuchtungseinheiten 30a, 30b, 30c, 30d umfassen Streifen von RGB-LEDs (Rot-Grün-Blau-Leuchtdioden) als Leuchtmittel, deren Lichtfarbe jeweils einzeln veränderbar ist. Zusätzlich oder alternativ können auch zwei Projektoren für eine streifenförmige Beleuchtung als Beleuchtungseinheiten (nicht gezeigt) an dem unteren Querträger 28 angebracht sein und die Objekte 12 beleuchten.

Wie in Fig. 1 gezeigt, umfasst das Gestell 18 auf der Auflagefläche 16 aufstehende Standfüße 32. An einem Standfuß 32 ist ein Schaltschrank 34 angebracht, in welchem eine (nicht gezeigte) Steuereinheit untergebracht ist.

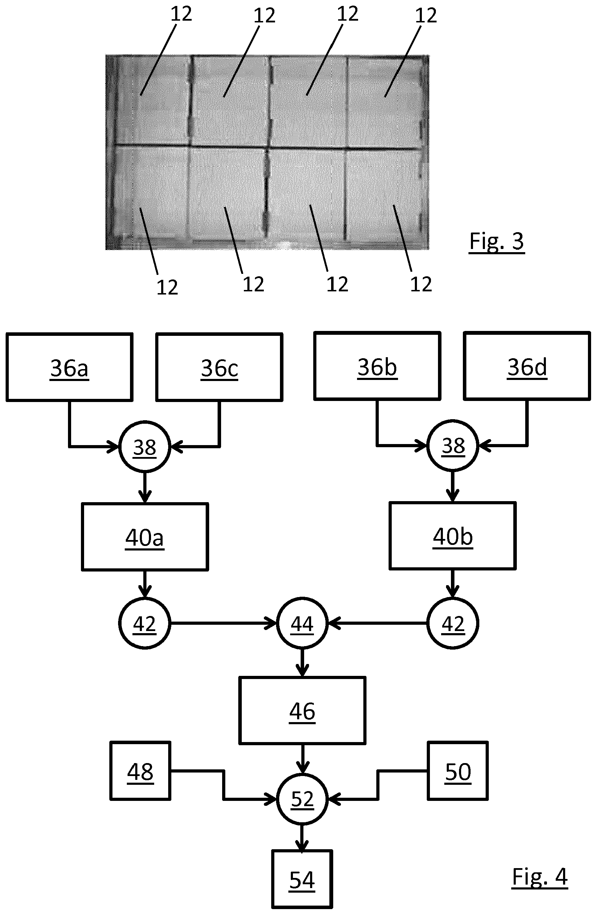

Fig. 3 zeigt ein von der CCD-Kamera 26 aufgenommenes zweidimensionales Bild der Objekte 12 in dem Transportbehälter 14. Die Objekte 12 sind in dem Transportbehälter 14 dicht aneinander angeordnet, so dass die freie Fläche zwischen den Objekten 12 kleiner als 5 % der von jeweils zwei benachbarten Objekten 12 eingenommenen Fläche des Bilds ist.

Die Ermittlung von Greifpunkten ist schematisch in Fig. 4 dargestellt. Dabei werden zunächst von der CCD-Kamera 26 vier zweidimensionale Bilder 36a, 36b, 36c, 36d aufgenommen, wobei bei der Aufnahme des zweidimensionalen Bilds 36a die Beleuchtungseinheit 30a aktiv ist. Bei Aufnahme des Bilds 36b ist entsprechend die Beleuchtungseinheit 30b aktiviert. Dementsprechend sind alle vier Bilder 36a, 36b, 36c, 36d benannt.

Anschließend wird jeweils aus zwei mit gegenüberliegender Beleuchtung aufgenommenen Bildern 36 mittels einer Maximumbildung 38 aus den Bildern 36a und 36c ein Maximumbild 40a und aus den Bildern 36b und 36d ein Maximumbild 40b erzeugt. Anschließend werden die Maximumbilder 40a, 40b jeweils einer Gradientenfilterung 42 unterzogen und mittels einer Minimumbildung 44 zu einem ersten Ergebnisbild 46 fusioniert.

Aus dem ersten Ergebnisbild 46 werden mittels einer von dem Laserscanner 22 ermittelten Abstandsinformation 48, die die Höhe des Objekts 12 über der Auflagefläche 16 angibt, und einem L-förmigen Template 50 die Begrenzungen des Objekts 12 sowie dessen räumliche Lage und dessen Schwerpunkt in einem Verarbeitungsschritt 52 ermittelt. In dem Verarbeitungsschritt 52 werden anschließend aus dem Schwerpunkt und der Begrenzung des Objekts 12 die Greifpunkte 54 bestimmt.

Die Bestimmung der Greifpunkte 54 wird von der Steuereinheit vorgenommen, wobei die Greifpunkte 54 von der Steuereinheit abschließend an einen (nicht gezeigten) Greifroboter übermittelt werden, der die einzelnen Objekte 12 dem Transportbehälter 14 entnimmt und deren weiterer Verarbeitung zuführt.

### Bezugszeichenliste

- 10: Vorrichtung
- 12: Objekte
- 14: Transportbehälter
- 16: Auflagefläche
- 18: Gestell
- 20: oberer Querträger
- 22: Laserscanner
- 24: mittlerer Querträger
- 26: CCD-Kamera
- 28: unterer Querträger
- 30a - 30d: Beleuchtungseinheit
- 32: Standfuß
- 34: Schaltschrank
- 36a - 36d: zweidimensionales Bild
- 38: Maximumbildung
- 40a, 40b: Maximumbild
- 42: Gradientenfilterung
- 44: Minimumbildung
- 46: erstes Ergebnisbild
- 48: Abstandsinformation
- 50: Template
- 52: Verarbeitungsschritt
- 54: Greifpunkt

## Patentansprüche

1. Verfahren zur Lokalisierung von Greifpunkten (54) von Objekten (12), wobei
- die Objekte (12) mittels eines 3D-Sensors (22) abgetastet werden,
- die Objekte (12) mittels zumindest einer ersten Beleuchtungseinheit (30a) beleuchtet werden, während die Objekte (12) mittels einer Kamera (26) erfasst werden,
- aus einem von der Kamera (26) erzeugten zweidimensionalen Bild (36a, 36b, 36c, 36d) die Begrenzungen der Objekte (12) ermittelt werden,
- aus erfasster Abstandsinformation des 3D-Sensors (22) und dem zweidimensionalen Bild (36a, 36b, 36c, 36d) eine räumliche Position der Objekte (12) ermittelt wird und
- die Greifpunkte (54) für die Objekte (12) aus den Begrenzungen und der räumlichen Position der Objekte (12) bestimmt werden,
**dadurch gekennzeichnet, dass**
die Objekte (12) zumindest auch von einer zweiten, dritten und vierten Beleuchtungseinheit (30b, 30c, 30d) beleuchtet werden, während die Objekte (12) mittels der Kamera (26) erfasst werden, wobei die Beleuchtungseinheiten (30a, 30b, 30c, 30d) räumlich versetzt zueinander angeordnet sind,
wobei die Relativpositionen des 3D-Sensors (22), der ersten Beleuchtungseinheit (30a) und der Kamera (26) zueinander bekannt sind und der 3D-Sensor (22),
die Beleuchtungseinheiten (30a, 30b, 30c, 30d) und die Kamera (26) zueinander beabstandet und ortsfest angeordnet sind, wobei die Beleuchtungseinheiten (30a, 30b, 30c, 30d) nacheinander aktiviert werden und die Kamera (26) bei Aktivierung jeder Beleuchtungseinheit (30a, 30b, 30c, 30d) die Objekte (12) erfasst und jeweils ein zweidimensionales Bild (36a, 36b, 36c, 36d) erzeugt, und
wobei aus jeweils zwei von der Kamera (26) erzeugten zweidimensionalen Bildern (36a, 36b, 36c, 36d) ein Maximumbild (40a, 40b) erzeugt wird, wobei
an dem Maximumbild (40a, 40b) eine Gradientenfilterung (42) vorgenommen wird, um ein Kantenbild zu erzeugen, und
jeweils zwei Kantenbilder mittels einer Minimumbildung (44) zu einem ersten Ergebnisbild (46) fusioniert werden, aus welchem die Begrenzungen der Objekte (12) ermittelt werden.

2. Verfahren nach Anspruch 1,
**dadurch gekennzeichnet, dass**
die Objekte (12) zusätzlich von der ersten und von der zweiten Beleuchtungseinheit (30a, 30b) mit einem Streifenmuster beleuchtet werden, während die Objekte (12) mittels der Kamera (26) erfasst werden.

3. Verfahren nach Anspruch 2,
**dadurch gekennzeichnet, dass** bei der zusätzlichen Beleuchtung mit einem Streifenmuster die erste und zweite Beleuchtungseinheit (30a, 30b) nacheinander aktiviert werden und die Kamera (26) bei Aktivierung jeder Beleuchtungseinheit (30a, 30b) die Objekte (12) erfasst und jeweils ein zweidimensionales Bild erzeugt.

4. Verfahren nach Anspruch 3,
**dadurch gekennzeichnet, dass** bei der zusätzlichen Beleuchtung mit einem Streifenmuster aus den von der Kamera (26) erzeugten zweidimensionalen Bildern, insbesondere mittels Gradientenfilterung (42), jeweils ein Kantenbild erzeugt wird, wobei die Kantenbilder mittels einer Minimumbildung (44) zu einem zweiten Ergebnisbild fusioniert werden.

5. Verfahren nach Anspruch 4,
**dadurch gekennzeichnet, dass**
in dem ersten oder in dem zweiten Ergebnisbild die Begrenzungen der Objekte (12) ermittelt werden, insbesondere indem das Ergebnisbild mit einer, bevorzugt L-förmigen, Vorlage (Template) (50) korreliert wird, und aus den Begrenzungen der Objekte (12) der jeweilige Schwerpunkt der Objekte (12) bestimmt wird.

6. Verfahren nach den Ansprüchen 5,
**dadurch gekennzeichnet, dass**
die Begrenzungen der Objekte (12) anhand des ersten und des zweiten Ergebnisbilds (46) ermittelt werden, insbesondere durch eine Mittelwertbildung.

7. Verfahren nach Anspruch 6,
**dadurch gekennzeichnet, dass**
mehrmals ein erstes und zweites Ergebnisbild (46) erzeugt wird, wobei die Begrenzungen der Objekte (12) mittels einer statistischen Auswertung der Ergebnisbilder (46) ermittelt werden.

8. Verfahren nach zumindest einem der vorstehenden Ansprüche,
**dadurch gekennzeichnet, dass**
das Emissionsspektrum der Beleuchtungseinheit oder der Beleuchtungseinheiten (30a, 30b, 30c, 30d) veränderbar ist und/oder das Emissionsspektrum insbesondere an eine Oberflächenfarbe der Objekte (12) angepasst wird.

9. Verfahren nach zumindest einem der vorstehenden Ansprüche,
**dadurch gekennzeichnet, dass**
die Beleuchtungseinheit oder die Beleuchtungseinheiten (30a, 30b, 30c, 30d) Infrarotlicht emittieren.

10. Verfahren nach zumindest einem der vorstehenden Ansprüche,
**dadurch gekennzeichnet, dass**
die Objekte (12) derart angeordnet werden, dass von der Position der Kamera (26) aus gesehen, die freie Fläche zwischen zwei Objekten (12) kleiner als 10%, bevorzugt kleiner als 5%, besonders bevorzugt kleiner als 1%, der von den zwei Objekten (12) eingenommenen Fläche ist.

11. Verfahren zum Greifen von Objekten (12), wobei
die Greifpunkte (54) der Objekte (12) nach einem der vorstehenden Ansprüche lokalisiert werden und die Objekte (12) nacheinander von einem Roboter mit einer Greifvorrichtung gegriffen und bewegt werden.

12. Vorrichtung (10) zur Lokalisierung von Greifpunkten (54) von Objekten (12), mit
einer Auflagefläche (16) zur Auflage der Objekte (12),
einer ersten, zweiten, dritten und vierten Beleuchtungseinheit (30a, 30b, 30c, 30d), die räumlich versetzt zueinander angeordnet sind,
einer Kamera (26), welche zu den Beleuchtungseinheiten (30a, 30b, 30c, 30d) beabstandet angeordnet ist, und
einem 3D-Sensor (22), welcher zu der Kamera (26) und den Beleuchtungseinheiten (30a, 30b, 30c, 30d) beabstandet und ortsfest angeordnet ist,
wobei die Relativpositionen des 3D-Sensors (22), der ersten Beleuchtungseinheit (30a) und der Kamera (26) zueinander bekannt sind, wobei die Vorrichtung zur Ausführung des Verfahrens zur Lokalisierung von Greifpunkten von Objekten nach Anspruch 1 ausgebildet ist.

## Claims

1. A method for the localization of gripping points (54) of objects (12), wherein
- the objects (12) are scanned by means of a 3D sensor (22);
- the objects (12) are illuminated by means of at least one first illumination unit (30a) while the objects (12) are detected by means of a camera (26);
- the boundaries of the objects (12) are determined from a two-dimensional image (36a, 36b, 36c, 36d) generated by the camera (26);
- a spatial position of the objects (12) is determined from detected distance information of the 3D sensor (22) and from the two-dimensional image (36a, 36b, 36c, 36d); and
- the gripping points (54) for the objects (12) are determined from the boundaries and from the spatial position of the objects (12),
**characterized in that**
the objects (12) are also at least illuminated by a second, third and fourth illumination unit (30b, 30c, 30d) while the objects (12) are detected by means of the camera (26), with the illumination units (30a, 30b, 30c, 30d) being arranged spatially offset from one another,
wherein the relative positions of the 3D sensor (22), of the first illumination unit (30a) and of the camera (26) with respect to one another are known and the 3D sensor (22), the illumination units (30a, 30b, 30c, 30d) and the camera (26) are arranged spaced apart and in fixed positions with respect to one another;
wherein the illumination units (30a, 30b, 30c, 30d) are activated one after the other and the camera (26) detects the objects (12) and respectively generates a two-dimensional image (36a, 36b, 36c, 36d) on an activation of each illumination unit (30a, 30b, 30c, 30d); and
wherein a maximum image (40a, 40b) is generated from a respective two two-dimensional images (36a, 36b, 36c, 36d) generated by the camera (26), wherein
a gradient filtering (42) is carried out on the maximum image (40a, 40b) to generate an edge image; and
a respective two edge images are fused to a first result image (46) by means of a minimum formation (44), the boundaries of the objects (12) being determined from said first result image.

2. A method in accordance with claim 1,
**characterized in that**
the objects (12) are additionally illuminated with a stripe pattern by the first and second illumination units (30a, 30b) while the objects (12) are detected by means of the camera (26).

3. A method in accordance with claim 2,
**characterized in that**
the first and second illumination units (30a, 30b) are activated one after the other on the additional illumination with a stripe pattern and the camera (26) detects the objects (12) and respectively generates a two-dimensional image on an activation of each illumination unit (30a, 30b).

4. A method in accordance with claim 3,
**characterized in that**,
on the additional illumination with a stripe pattern, a respective edge image is generated, in particular by means of gradient filtering (42), from the two-dimensional images generated by the camera (26), with the edge images being fused to a second result image by means of a minimum formation (44).

5. A method in accordance with claim 4,
**characterized in that**
the boundaries of the objects (12) are determined in the first result image or in the second result image, in particular **in that** the result image is correlated with a template (50) which is preferably of L shape, and the respective center of mass of the objects (12) is determined from the boundaries of the objects (12).

6. A method in accordance with claim 5,
**characterized in that**
the boundaries of the objects (12) are determined using the first and second result images (46), in particular by a mean value formation.

7. A method in accordance with claim 6,
**characterized in that**
first and second result images (46) are generated a multiple of times, with the boundaries of the objects (12) being determined by means of a statistical evaluation of the result images (46).

8. A method in accordance with at least one of the preceding claims,
**characterized in that**
the emission spectrum of the illumination unit or of the illumination units (30a, 30b, 30c, 30d) is variable; and/or **in that** the emission spectrum is in particular adapted to a surface color of the objects (12).

9. A method in accordance with at least one of the preceding claims,
**characterized in that**
the illumination unit or the illumination units (30a, 30b, 30c, 30d) emit infrared light.

10. A method in accordance with at least one of the preceding claims,
**characterized in that**
the objects (12) are arranged such that, viewed from the position of the camera (26), the free area between two objects (12) is smaller than 10%, preferably smaller than 5%, particularly preferably smaller than 1%, of the area taken up by the two objects (12).

11. A method for the gripping of objects (12), wherein
the gripping points (54) of the objects (12) are localized in accordance with any one of the preceding claims and the objects (12) are gripped and moved one after the other by a robot using a gripping apparatus.

12. An apparatus (10) for the localization of gripping points (54) of objects (12), having
a support surface (16) for the support of the objects (12);
a first, second, third and fourth illumination unit (30a, 30b, 30c, 30d) which are arranged spatially offset from one another;
a camera (26) which is arranged spaced apart from the illumination units (30a, 30b, 30c, 30d); and
a 3D sensor (22) which is arranged spaced apart and in a fixed position with respect to the camera (26) and to the illumination units (30a, 30b, 30c, 30d),
wherein the relative positions of the 3D sensor (22), of the first illumination unit (30a) and of the camera (26) with respect to one another are known; and wherein the apparatus is configured to carry out the method for the localization of gripping points of objects in accordance with claim 1.

## Revendications

1. Procédé de localisation de points de saisie (54) d'objets (12), dans lequel
- les objets (1) sont balayés au moyen d'un capteur 3D (22),
- les objets (12) sont éclairés au moyen d'au moins une première unité d'éclairage (30a) pendant que les objets (12) sont détectés au moyen d'une caméra (26),
- les limites des objets (12) sont déterminées à partir d'une image bidimensionnelle (36a, 36b, 36c, 36d) générée par la caméra (26),
- une position spatiale des objets (12) est déterminée à partir de l'information de distance détectée du capteur 3D (22) et de l'image bidimensionnelle (36a, 36b, 36c, 36d), et
- les points de saisie (54) pour les objets (12) sont définis à partir des limites et de la position spatiale des objets (12),
**caractérisé en ce que**
les objets (12) sont éclairés également par au moins une seconde, une troisième et une quatrième unité d'éclairage (30b, 30c, 30d) pendant que les objets (12) sont détectés au moyen de la caméra (26), les unités d'éclairage (30a, 30b, 30c, 30d) étant agencées en étant décalées dans l'espace les unes par rapport aux autres,
et les positions relatives du capteur 3D (22), de la première unité d'éclairage (30a) et de la caméra (26) les unes par rapport aux autres sont connues et le capteur 3D (22), les unités d'éclairage (30a, 30b, 30c, 30d) et la caméra (26) sont espacés les uns des autres et agencés de façon stationnaire,
les unités d'éclairage (30a, 30b, 30c, 30d) sont activées les unes après les autres et la caméra (26) détecte les objets (12) lors d'une activation de chaque unité d'éclairage (30a, 30b, 30c, 30d) et génère une image bidimensionnelle respective (36a, 36b, 36c, 36d), et
une image maximale (40a, 40b) est générée à partir de deux images bidimensionnelles respectives (36a, 36b, 36c, 36d) générées par la caméra (26),
un filtrage à gradient (42) est effectué sur l'image maximale (40a, 40b), afin de générer une image à contours détectés, et
deux images à contours détectés sont fusionnées en une première image résultante (46) par formation d'un minimum (44), image à partir de laquelle les limites des objets (12) sont déterminées.

2. Procédé selon la revendication 1,
**caractérisé en ce que**
les objets (12) sont illuminés en supplément avec un motif à rayures par la première et par la seconde unité d'éclairage (30a, 30b) pendant que les objets (12) sont détectés au moyen de la caméra (26).

3. Procédé selon la revendication 2,
**caractérisé en ce que**
lors de l'illumination supplémentaire avec un motif à rayures, la première et la seconde unité d'éclairage (30a, 30b) sont activées l'une après l'autre et la caméra (26) détecte les objets (12) lors de l'activation de chaque unité d'éclairage (30a, 30b) et génère une image bidimensionnelle respective.

4. Procédé selon la revendication 3,
**caractérisé en ce que**
lors de l'illumination supplémentaire avec un motif à rayures, une image respective à contours détectés est générée à partir des images bidimensionnelles générées par la caméra (26), en particulier au moyen d'un filtrage à gradient, les images à contours détectés étant fusionnées en une seconde image résultante par formation d'un minimum (44).

5. Procédé selon la revendication 4,
**caractérisé en ce que**
les limites des objets (12) sont déterminées dans la première ou dans la seconde image résultante, en particulier en corrélant l'image résultante avec un modèle (template) (50) de préférence en forme de L, et la priorité respective des objets (12) est définie à partir des limites des objets (12).

6. Procédé selon la revendication 5,
**caractérisé en ce que**
les limites des objets (12) sont déterminées à partir de la première et de la seconde image résultante (46), en particulier par formation de la moyenne.

7. Procédé selon la revendication 6,
**caractérisé en ce que**
une première et une seconde image résultante (46) sont générées plusieurs fois, et les limites des objets (12) sont déterminées au moyen d'une évaluation statistique des images résultantes (46).

8. Procédé selon l'une au moins revendications précédentes,
**caractérisé en ce que**
le spectre d'émission de l'unité d'éclairage ou des unités d'éclairage (30a, 30b, 30c, 30d) est variable et/ou le spectre d'émission est adapté en particulier à une couleur de surface des objets (12).

9. Procédé selon l'une des revendications précédentes,
**caractérisé en ce que**
l'unité d'éclairage ou les unités d'éclairage (30a, 30b, 30c, 30d) émettent une lumière infrarouge.

10. Procédé selon l'une des revendications précédentes,
**caractérisé en ce que**
les objets (12) sont agencés de telle sorte que, vus depuis la position de la caméra (26) la surface libre entre deux objets (12) est inférieure à 10 %, de préférence inférieure à 5 %, de manière particulièrement préférée inférieure à 1 % de la surface occupée par les deux objets (12).

11. Procédé de saisie d'objets (12), dans lequel
les points de saisie (54) des objets (12) sont localisés selon l'une des revendications précédentes, et les objets (12) sont saisis et déplacés successivement par un robot au moyen d'un dispositif de saisie.

12. Dispositif (10) de localisation de points de saisie (54) d'objets (12), comportant
une surface d'appui (16) pour appuyer les objets (12),
une première, une seconde, une troisième et une quatrième unité d'éclairage (30a, 30b, 30c, 30d) qui sont agencées en étant décalées dans l'espace les unes des autres,
une caméra (26) qui est agencée à distance des unités d'éclairage (30a, 30b, 30c, 30d), et
un capteur 3D (22) qui est agencé à distance de la caméra (26) et des unités d'éclairage (30a, 30b, 30c, 30d) et de façon stationnaire,
les positions relatives du capteur 3D (22), de la première unité d'éclairage (30a) et de la caméra (26) les uns par rapport aux autres sont connues, et le dispositif est réalisé pour mettre en oeuvre le procédé de localisation de points de saisie d'objets selon la revendication 1.
